# EUROPEAN PATENT APPLICATION

(11) **EP 2 985 608 A1**
(43) Date of publication of application: **17.02.2016**
(21) Application number: 14181157.0
(22) Date of filing: 15.08.2014
(51) Int. Cl.: G01Q 60/22, G01Q 70/14, G01N 21/65

(54) **Protected tip for TERS and process for its production**

(71) Applicant: ETH Zurich, 8092 Zurich (CH)
(72) Inventor: Li, Jian-Feng, 8092 Zürich (CH); Opilik, Lothar, 8037 Zürich (CH); Zenobi, Renato, 8049 Zürich (CH)
(74) Representative: Detken, Andreas

(57) **Abstract**

A protected tip for apertureless near-field optical applications is disclosed. The protected tip comprises an SPM tip having a metallic surface (11) and at least one protective coating (20) of a dielectric material applied to the metallic surface. The protective coating is linked to the metallic surface by a self-assembled layer (30) of organic linker molecules.

## Description

### TECHNICAL FIELD

The present invention relates to a protected tip for apertureless near-field optical applications, and to a process for the production of a protected tip. More specifically, the tip may be employed in tip-enhanced Raman spectroscopy (TERS).

### PRIOR ART

Apertureless scanning near-field optical microscopy (SNOM) is a nanoscale optical technique, in which a sub-wavelength sized scatterer illuminated by a diffraction-limited excitation light beam is scanned over a sample surface. The scatterer can lead to an enhanced excitation light field in its proximity and therefore acts as a near-field light source for a portion of the sample surface that is in immediate vicinity of the scatterer. The response of the sample surface to the excitation light field is observed through a microscope.

The scatterer can take the form of a sharp metallic or metallized tip, which enhances the excitation light field mainly through the excitation of localized surface plasmon resonances near the tip apex. If Raman spectroscopic measurements are carried out for the observed light from the sample surface, the technique is called tip-enhanced Raman spectroscopy (TERS). An overview over TERS is provided in [Schmid, T.; Opilik, L.; Blum, C.; Zenobi, R. Angewandte Chemie International Edition 2013, 52, 5940-5954].

Silver and gold are the most commonly used tip materials because of their unique optical properties. Their nanostructures show strong optical resonances in the visible part of the electromagnetic spectrum. Silver can be used for plasmonics in the whole visible range, whereas gold shows interband transitions in the blue and green part of the spectrum and is therefore limited in its applicability. However, silver has the disadvantage of low chemical stability limiting its usability under atmospheric conditions, whereas gold is chemically very inert.

The position of the metallic tip is controlled by means of a scanning probe microscopy (SPM) feedback system. Depending on the used feedback mechanism, different kinds of tips are used. TERS tips in scanning tunneling microscopy (STM) feedback are most commonly prepared by electrochemical etching of silver or gold wires. This is a very quick way to prepare a TERS tip. In contrast, atomic force microscopy (AFM) feedback requires a reflective cantilever for tip position control. Therefore, the easiest way to produce tips for AFM-TERS experiments is to deposit the required metal (silver or gold) on commercial silicon or silicon nitride AFM probes.

Etched-wire tips as well as silver-coated AFM tips must be used within the first couple of days after production, because their lifetime is limited by the chemical instability of the silver coating. It is known that silver reacts with sulfur compounds from the atmosphere (e.g. H₂S) resulting in a visible color change (tarnishing). It has therefore been proposed in the prior art to protect the silver by a protective coating.

A protective Al₂O₃ coating on a silver-coated AFM tip was demonstrated in [Barrios, C. A.; Malkovskiy, A. V.; Kisliuk, A. M.; Sokolov, A. P.; Foster, M. D. Journal of Physical Chemistry C 2009, 113, 8158-8161]. The coating was applied by physical vapor deposition (PVD). Such a coating was further investigated in [Agapov, R. L.; Malkovskiy, A. V.; Sokolov, A. P.; Foster, M. D. Journal of Physical Chemistry C 2011, 115, 8900-8905] and [Agapov, R. L.; Sokolov, A. P.; Foster, M. D. Journal of Raman Spectroscopy 2013, 44, 710-716.].

A protective SiO₂ coating on a silver-coated AFM tip was proposed in a theoretical study in [Cui, X.; Erni, D.; Zhang, W.; Zenobi, R. Chemical Physics Letters 2008, 453, 262-265]. For producing such tips, a vapor deposition technique such as PECVD was proposed, but not demonstrated experimentally.

WO 2009/085184 discloses a metallic or metallized SPM tip protected by a dielectric layer. The layer, which can be comprised of SiOₓ or Al₂O₃, is applied by a PVD process.

Vapor deposition techniques are relatively complicated and have a tendency to produce undesired pinholes in the coating.

A self-assembled monolayer (SAM) of ethanethiol on a silver-coated AFM tip is disclosed in [Schmid, T.; Yeo, B.-S.; Leong, G.; Stadler, J.; Zenobi, R. Journal of Roman Spectroscopy 2009, 40, 1392-1399]. The ethanethiol monolayer protects the tip from contaminants adsorbing to its surface when working in a liquid environment. However, such a monolayer is unstable and is not able to protect the tip surface from degradation during storage.

A completely different approach is disclosed in [Li, J. F.; Huang, Y. F; Ding, Y; Yang, Z. L.; Li, S. B.; Zhou, X. S.; Fan, F. R.; Zhang, W.; Zhou, Z. Y.; Wu, D. Y.; Ren, B.; Wang, Z. L.; Tian, Z. Q., Nature 2010, 464, 392-395]. Related disclosure is also found in CN 101832933 A. Gold nanoparticles are coated with a silica or alumina shell. The coated nanoparticles are spread as a "smart dust" over the surface to be probed so as to form a monolayer. The ultrathin coating keeps the nanoparticles from agglomerating and separates them from direct contact with the probed material. Each coated gold particle acts as a near-field light source when illuminated by an excitation light beam. Observation is carried out in the same manner as usually in surface-enhanced Raman spectroscopy (SERS).

### SUMMARY OF THE INVENTION

In a first aspect, it is an object of the present invention to provide a protected tip for apertureless near-field optical microscopy that can be produced easily and with controlled, uniform thickness.

This object is achieved by a protected tip for apertureless near-field optical microscopy, the protected tip comprising:
an SPM tip having a metallic surface; and
at least one protective coating of a dielectric material applied to said metallic surface,
wherein the protective coating is linked to the metallic surface by a self-assembled layer of organic linker molecules.

Such tips can be produced by a wet-chemical method, rather than by vapor deposition methods as in the prior art. In this manner, it is possible to obtain a protective layer of very uniform thickness and to precisely control the thickness of the protective layer. In particular, the self-assembled layer of organic linker molecules and the protective coating together can have a thickness of less than 20 nm, preferably less than 10 nm, more preferably less than 5 nm, most preferably between 0.5 nm and 3 nm, as determined, e.g., by transmission electron microscopy (TEM). Despite the low thickness, it is readily possible to obtain protective coatings that are free of pinholes. Production is very simple, and large batches can be produced at a time.

The metallic surface of the tip may consist, e.g., of silver (Ag), gold (Au), palladium (Pd), platinum (Pt), copper (Cu), aluminum (Al), any other metal that is capable of exhibiting surface plasmon resonances, or combinations and alloys thereof. Silver and gold are preferred. If the metal is silver or a silver alloy, the shelf life of the tip is much extended by the protective coating, and the protected tip can be used in a wider range of environments than a bare tip. Furthermore, for any tip material, the coating can reduce catalytic effects that can be caused by the tip material when uncoated tips are used. The coating can also increase durability of the tip, improve wear resistance and extend the tip's lifetime. The coating can further be used to selectively functionalize the tip, e.g., in order to stimulate specific interactions between the tip and the sample surface.

The dielectric material of the coating may comprise or consist of silica (silicon oxide, SiOₓ, where x can be approximately 2). In this case, it is preferred that the organic linker molecules are organofunctional alkoxysilane molecules, in particular, organofunctional methoxysilane and/or ethoxysilane molecules. In the present context, the term "organofunctional alkoxysilane" is to be understood as encompassing any silane (SiH₄) derivative in which one hydrogen atom is replaced by a functional organic group, and in which at least one of the three remaining hydrogen atoms is replaced by an alkoxy group. Preferably, all three remaining hydrogen atoms are replaced by alkoxy groups; however, one or more of the remaining hydrogen atoms can remain unsubstituted or can instead be replaced by an alkyl group, in particular, by a methyl or ethyl group.

The functional organic group in the organofunctional alkoxysilane can be, for instance, an aminoalkyl group or, in preferred embodiments, an n-mercaptoalkyl group. In other words, it is preferred that the organic linker molecules are (n-mercaptoalkyl) alkoxysilane molecules. The n-mercaptoalkyl group preferably has a chain length between 1 and 15 carbon atoms, in particular a chain length of 1 (mercaptomethyl), of 2 (mercaptoethyl), of 3 (3-mercaptopropyl), of 4, of 5 or of 6 carbon atoms. The alkyl moiety of the mercaptoalkyl group is preferably linear (unbranched). In particular, the linker molecules can be (3-mercaptopropyl) methoxysilane and/or (3-mercaptopropyl) ethoxysilane molecules. Preferred linker molecules are (3-mercaptopropyl) trimethoxysilane, (3-mercaptopropyl) methyl-dimethoxysilane, and/or (3-mercaptopropyl) triethoxysilane.

The SPM tip may be, in particular, an AFM tip or an STM tip. Depending on the type of tip, the tip may comprise an electrically non-conducting core (e.g., of silicon or silicon nitride; in the present context, any material having a conductivity below 10³ S/m is considered to be essentially non-conducting) with a metal coating thereon, the metal coating forming the metal surface. Such tips are typically employed in AFM setups. In other embodiments, the tip can be made of solid metal, e.g., it can be eroded from a metal wire. Such tips are often, but not exclusively, employed in STM setups.

The present invention encompasses the use of a protected tip as described above in any apertureless near-field optical application, including, but not limited to, Raman, infrared, fluorescence, photoluminescence, sum frequency generation, two-photon or photoemission spectroscopies. In a preferred application, the protected tip of the present invention is used in tip-enhanced Raman spectroscopy (TERS), wherein the Raman signal from the sample surface portion in proximity to the tip is recorded and spectrally analyzed.

In general terms, an apertureless scanning near-field optical microscopy method that employs the protected tip of the present invention may comprise the following steps:
illuminating the protected tip with an excitation light beam;
scanning the protected tip over a sample surface; and
spectroscopically observing light scattered from a sample surface portion that is in proximity to the protected tip.

In a second aspect, the present invention provides a simple and efficient process for producing a protected tip for apertureless near-field optical applications, in particular, a protected tip as described above. The process comprises:
immersing an SPM tip having a metallic surface in a solution comprising organic linker molecules to obtain a functionalized SPM tip comprising a self-assembled layer of organic linker molecules on said metallic surface;
washing the functionalized SPM tip to remove excess organic linker molecules (e.g., washing with an alcohol like ethanol or isopropanol); and
immersing the functionalized SPM tip in a silicate solution to form a protective coating comprising silicon oxide on said functionalized SPM tip.

In this process, it is preferred that the silicate solution is kept at an elevated temperature while the functionalized SPM tip is immersed therein, in order to accelerate formation of the silica shell. In particular, the elevated temperature may be between 25 °C and 100 °C. The process can be carried out for large batches of tips at a time. All considerations that are outlined above for the protected tip of the present invention are likewise applicable to the process of the present invention.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: is a schematic sketch illustrating a setup for TERS;
- Fig. 2: is a schematic sketch illustrating a protected STM tip;
- Fig. 3: is a schematic sketch illustrating a protected AFM tip;
- Fig. 4: is an illustration of a process for producing protected tips;
- Fig. 5: is an illustration of a functionalized metal surface after step (b) of the process in Fig. 4;
- Fig. 6: is an illustration of a protected metal surface after step (d) of the process in Fig. 4; and
- Fig. 7: is a diagram comparing Raman intensity as a function of storage time for unprotected silver tips and protected silver tips.

### DESCRIPTION OF PREFERRED EMBODIMENTS

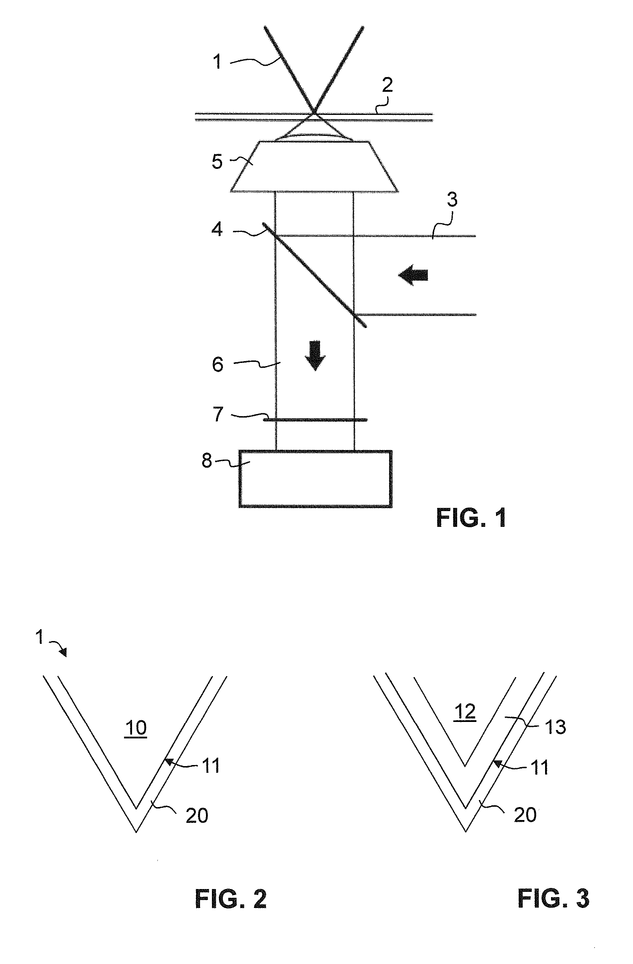

Figure 1 schematically illustrates a typical TERS setup. A sharp metallic or metallized tip 1 is scanned over the surface of a sample 2 with the aid of an SPM device (not shown), as it is generally well known in the art. The tip is illuminated by an excitation laser beam 3, which is deflected by a semitransparent mirror 4 and focused on the tip by an objective 5. The excitation light field is enhanced by localized surface plasmon resonances that are excited in the tip, causing the tip to act as a near-field light source for a surface portion of the sample that is in immediate proximity to the tip (typically less than 25 nanometers from the tip apex). The light 6 that is scattered back from the sample is observed through the objective 5. For TERS, the light passes through an edge or notch filter 7 into a spectrometer 8 where it is analyzed in a manner that is well known per se in Raman spectroscopy. In other setups, illumination and detection can also be carried out from other directions, e.g., from the side.

Depending on the kind of SPM device, different types of tips 1 are employed. For instance, if the SPM device is an STM device, the tip can be made of a solid piece of metal, e.g., of an eroded silver or gold wire. If the SPM device is an AFM device, the tip will often be part of a mechanical cantilever structure. In this case, the tip will typically be made of a non-conducting material like silicon or silicon nitride. To render the tip suitable for SNOM applications, it must be coated with a metal like silver or gold, resulting in a tip having a non-conducting core that is coated by a metal. In both cases, the tip will eventually have a metallic surface, in which localized surface plasmons can be excited. It has also been proposed to utilize eroded wires in AFM setups.

In the present invention, the bare tip is provided with a dielectric protective coating. This is illustrated for two different types of tips 1 in Figures 2 and 3. Figure 2 illustrates an STM tip 10 coated with a protective coating 11. The bare tip 10 consists of solid metal, forming a metallic surface 11. A dielectric coating 20 is applied to the metallic surface 11. This coating will be described in more detail below. Figure 3 illustrates an AFM tip. The tip has a silicon or silicon nitride core 12, on which a metallic coating 13 has been applied, e.g., by physical vapor deposition. The metallic surface 11 is now formed by the metallic coating 13. Again, a protective coating 20 is applied to the metallic surface 11. It is to be understood that Figures 2 and 3 are highly schematic sketches and are not drawn to scale. In general, the metallic coating 13 will be much thicker than the protective coating 20.

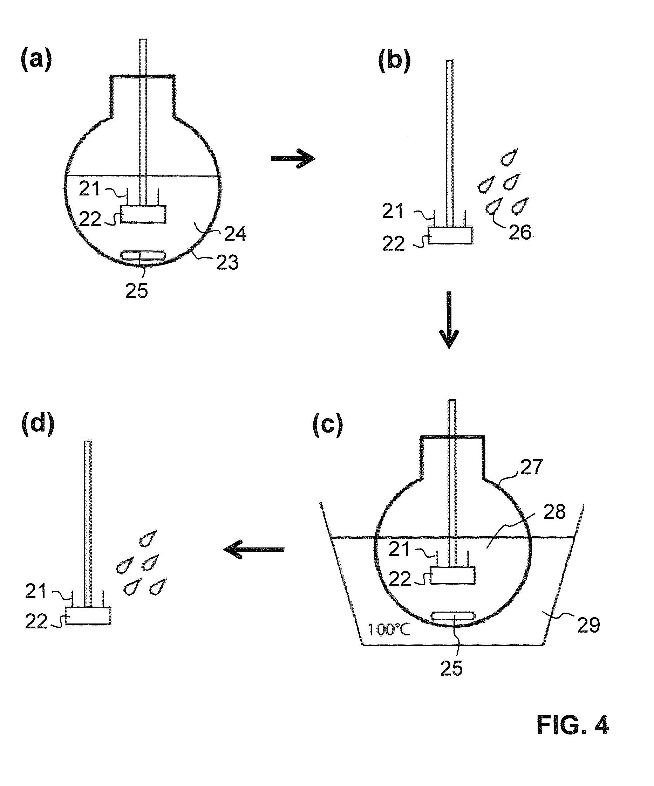

Figure 4 illustrates a method for producing a protected tip. A batch of tips 21 are mounted on a tip holder 22. The tips are immersed in a solution 24 containing linker molecules, which in the present example is held in a flask 23. The concentration of linker molecules in the solution 24 is preferably in the range between 0.1 mM and 100 mM, in particular between 10 mM and 100 mM. The tips are left in the solution for a time that may range from only minutes to many hours, e.g. from 1 minute to a 48 hours, preferably from 30 minutes to 8 hours, while stirring with a stirrer 25 (step a). In this manner, a self-assembled monolayer of the linker molecules is formed on the metallic surface of the tips, so as to obtain a functionalized tip surface.

Subsequently the tips are rinsed with a solvent 26, e.g., ethanol, to remove excess linker molecules (step b). The functionalized tips are then immersed in a silicate solution 28, in particular, a sodium silicate solution, which in the present example is held in a flask 27. The tips are left in the solution while stirring. The flask 27 is immersed in a water bath 29, which is kept at an elevated temperature (in the present example, 100 °C) (step c). As a result, a silica shell will grow on the functionalized tip surface. Once the silica shell has sufficiently grown, the tips are removed from the silicate solution 28 and are rinsed with water (step d).

Growth rate is adjusted by adjusting temperature, silicate concentration, and pH of the silicate solution. Typical ranges for the temperature of the silicate solution during growth of the silica shell are 25 °C to 100 °C, preferably 80 °C to 100 °C, more preferably 90 °C to 100 °C. Typical ranges for the silicate concentration are 0.01 % w/w to 1% w/w, preferably 0.02% w/w to 0.1% w/w. Typical ranges for the pH are 1 to 4, preferably 1.5 to 3. Typical time ranges for obtaining a silica shell of approximately 10 nm thickness are 30 minutes to 48 hours, depending on the above parameters.

It is readily apparent that large batches of protected tips can be manufactured by this method.

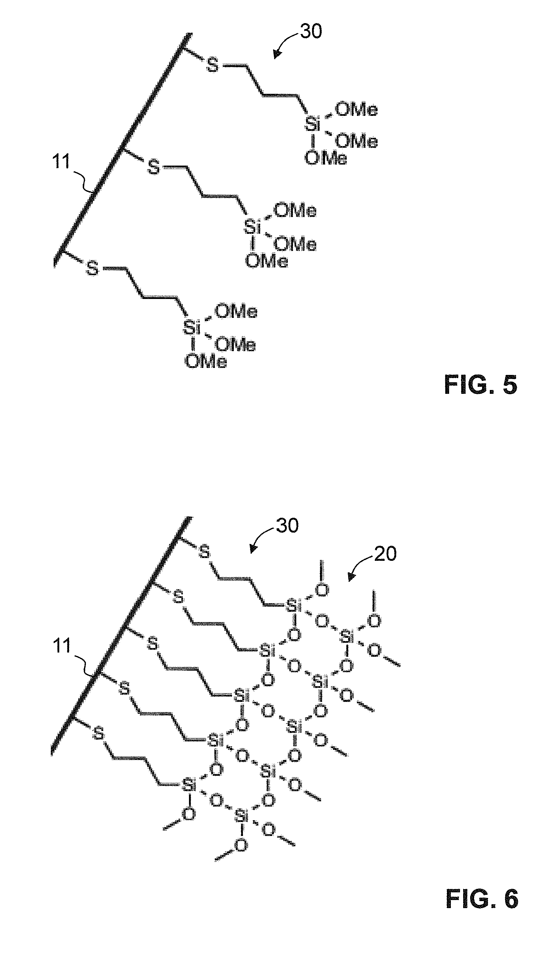

Figure 5 illustrates the functionalized tip surface after step (b) for the case where the surface is a silver surface and the linker molecules are (3-mercaptopropyl) trimethoxysilane (MPS) molecules. A self-assembled monolayer 30 of the MPS molecules has formed on the surface 11. Covalent bonds are established between the sulfur atom of the thio functionality and the silver surface.

Figure 6 illustrates the protected surface after step (d). A solid silica layer 20 has grown on the MPS monolayer 30, protecting the metal surface 11.

### Example

Bare Ag tips were prepared by electrochemical etching of Ag wires (0.25 mm diameter, 99.99% purity, Sigma Aldrich, USA). A 1:2 perchloric acid:methanol solution was used as etchant and a potential of 8 V was applied.

To protect the tips, they were immersed in a 50 mM 3-mercaptopropyltrimethoxysilane (MPS, 95%, Alfa Aesar, USA) solution for 1-1.5 h at room temperature. 4 ml of a 0.1 M HCl solution was mixed with 60 ml milliQ water and 6.4 ml of a 0.54 % w/w silicate solution (from sodium silicate solution, Sigma Aldrich, USA) in a round bottom flask to obtain a 0.05% w/w silicate solution at pH 2.2. The tips were then removed from the MPS solution and rinsed with ethanol before transferring them to the freshly prepared silicate solution. The tips were left there for 3 to 5 minutes while stirring. After that, the flask with the silicate solution and the immersed tips was transferred to a water bath at 100 °C and left there for 2 to 2.5 h. The resulting protected tips were then removed and washed with ultrapure water (NANOpure Diamond, 18.2 MΩcm).

The protected tips were investigated by transmission electron microscopy (TEM). TEM images of a region close to the tip apex showed a thin (< 20 nm) amorphous silica shell, which uniformly covered the underlying metal structure.

To rule out the presence of pinholes, the quality of the protective layer was checked by dipping the protected tips into an ethanolic thiophenol solution to allow chemisorption of thiophenol molecules on the exposed metal surface (if pinholes in the silica shell are present). The tips were then rinsed extensively with ethanol to remove physisorbed thiophenol molecules. Subsequent TERS measurements on bare Au surfaces showed no presence of thiophenol Raman signals, whereas the same tip on a thiophenol SAM on gold yielded a strong Raman scattering response. For demonstration purposes, tips with an incomplete silica shell were intentionally prepared and used for the pinhole test described above. The spectral pattern of thiophenol was observed for the TERS measurement on bare Au in this case.

Tip-enhanced Raman experiments were performed with a NTEGRA Spectra (NT-MDT). A 632.8 nm HeNe laser was used for excitation and the instrument was equipped with a Andor Newton EMCCD camera for detection.

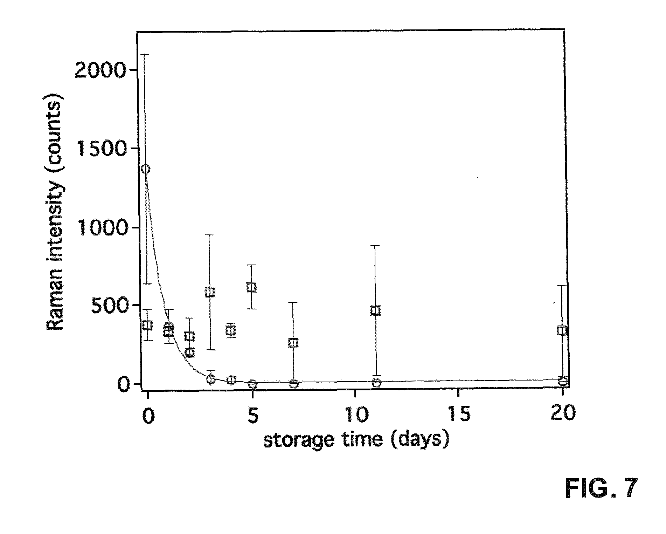

Figure 7 compares the decay of Raman signal intensity over time for TERS measurements on a thiophenol SAM on gold using bare silver tips (circles) and protected tips (squares). Each data point in the graph represents the averaged signal intensity from three tested tips. Each tip was used for measurements at three different positions on the sample surface. The tips were only used for these three measurements and stored under normal lab conditions prior to that moment. For the bare tips, significant decrease in Raman intensity during the first three days is clearly visible. After three days it was not possible anymore to obtain a TER spectrum from the thiophenol SAM. The loss in enhancement is most probably caused by tarnishing. In contrast, signal intensity remained stable over at least 20 days for the protected tips.

## Claims

1. A protected tip (1) for apertureless near-field optical applications, comprising:
an SPM tip (10; 12, 13) having a metallic surface (11); and
a protective coating (20) of a dielectric material applied to said metallic surface (11),
**characterized in that** the protective coating (20) is linked to the metallic surface (11) by a self-assembled layer (30) of organic linker molecules.

2. The protected tip of claim 1, wherein the self-assembled layer (30) of organic linker molecules and the protective coating (20) together have a thickness of less than 20 nm, preferably less than 10 nm, more preferably less than 5 nm.

3. The protected tip of claim 1 or 2, wherein the protective coating (20) is free of pinholes.

4. The protected tip of any one of the preceding claims, wherein the dielectric material comprises or consists of silicon oxide, and wherein the organic linker molecules are organofunctional alkoxysilane molecules, in particular, organofunctional methoxysilane or ethoxysilane molecules.

5. The protected tip of claim 4, wherein the organic linker molecules are (n-mercaptoalkyl)-alkoxysilane molecules comprising a n-mercaptoalkyl group with a chain length between 1 and 15 carbon atoms, in particular, (3-mercaptopropyl)-methoxysilane and/or (3-mercaptopropyl)-ethoxysilane molecules, and preferably are at least one of (3-mercaptopropyl)-trimethoxysilane, (3-mercaptopropyl)-methyl-dimethoxysilane, and (3-mercaptopropyl)-triethoxysilane molecules.

6. The protected tip of any one of the preceding claims, wherein the metallic surface (11) is a silver surface.

7. The protected tip of any one of the preceding claims, wherein the SPM tip (12, 13) comprises an essentially non-conducting core (12) with a metal coating (13) thereon, the metal coating (13) forming the metallic surface (11).

8. The protected tip of any one of claims 1-6, wherein the SPM tip (10) is made of solid metal, the metal forming the metallic surface (11).

9. The use of a tip according to any one of the preceding claims in tip-enhanced Raman spectroscopy.

10. A process for producing a protected tip (1) for apertureless near-field optical applications, comprising:
immersing an SPM tip having a metallic surface (11) in a solution comprising organic linker molecules to obtain a functionalized SPM tip (21) comprising a self-assembled layer (30) of organic linker molecules on said metallic surface (11);
washing the functionalized SPM tip (21) to remove excess organic linker molecules; and
immersing the functionalized SPM tip (21) in a silicate solution (28) to form a protective coating (20) comprising silicon oxide on said functionalized SPM tip (21).

11. The process of claim 10, wherein the silicate solution (28) is kept at an elevated temperature while the functionalized SPM tip (21) is immersed therein.

12. The process of claim 10 or 11, wherein the organic linker molecules are organofunctional alkoxysilane molecules, in particular, organofunctional methoxysilane or ethoxysilane molecules.

13. The process of claim 12, wherein the organic linker molecules are (n-mercaptoalkyl)-alkoxysilane molecules comprising a n-mercaptoalkyl group with a chain length between 1 and 15 carbon atoms, in particular, (3-mercaptopropyl)-methoxysilane and/or (3-mercaptopropyl)-ethoxysilane molecules, and preferably are at least one of (3-mercaptopropyl)-trimethoxysilane, (3-mercaptopropyl)-methyl-dimethoxysilane, and (3-mercaptopropyl)-triethoxysilane molecules.

14. The process of any one of claims 10-13, wherein the metallic surface (11) is a silver surface.
